# FASCICULE DE BREVET EUROPEEN

(11) **EP 3 571 511 B1**
(45) Date de publication et mention de la délivrance du brevet: **24.12.2025**
(21) Numéro de dépôt: 18702764.4
(22) Date de dépôt: 17.01.2018
(51) Int. Cl.: G01N 35/00, G01N 35/04

(54) **SYSTEME D'ANALYSES BIOLOGIQUES**
BIOLOGISCHES ANALYSESYSTEM
BIOLOGICAL ANALYSIS SYSTEM

(30) Priorité: 19.01.2017 FR 1750430
(43) Date de publication de la demande: 27.11.2019
(73) Titulaire: Horiba ABX SAS, 34184 Montpellier Cedex 4 (FR)
(72) Inventeur: BEAUDUCEL, Florent, 34070 Montpellier (FR); BENEZETH, Philippe, 30132 Caissargues (FR); CRES, Thibault, 34740 Vendargues (FR)
(74) Mandataire: Cabinet Netter
(86) Numéro de dépôt international: PCT/FR2018/050111
(87) Numéro de publication internationale: WO 2018/134518

(56) Documents cités:
- EP-A1- 2 330 425
- JP-A- H10 282 111
- JP-B2- 5 049 769
- US-A1- 2014 273 242

## Description

L'invention concerne le domaine des analyses biologiques et leur automatisation.

Dans un laboratoire d'analyses biologiques, la gestion optimale du flux des échantillons est devenue un élément crucial. En effet, plus un laboratoire est grand, et plus il devient complexe et nécessaire de gérer au mieux le flux de prélèvements biologiques faisant l'objet des analyses. Deux critères sont particulièrement importants à considérer : le temps de traitement des échantillons et la charge de travail que chaque action induit au personnel de laboratoire.

Afin d'améliorer les performances selon ces critères, des systèmes d'analyses biologiques ont été développés, qui sont basés sur la mise en communication de plusieurs dispositifs d'analyses biologiques par le biais d'un moyen de transport de portoirs contenant des tubes d'échantillons. L'association de plusieurs dispositifs par le moyen de transport permet de mieux gérer les pannes, les situations à problèmes et de mettre en œuvre certaines stratégies de gestion du débit.

Ces systèmes comprennent en général une entrée pour les portoirs, un moyen de transport qui distribue les portoirs en entrée à l'un des dispositifs qui lui est relié, et une sortie pour les portoirs ayant fait l'objet d'analyses. Certains systèmes peuvent comprendre une zone tampon en entrée et/ou en sortie, et mettre en œuvre des algorithmes pour gérer le débit. EP2330425 A1 décrit un système de traitement d'échantillons comprenant une unité de chargement/déchargement 100 de portoirs d'échantillons et plusieurs modules d'analyse 400a, 400b, un convoyeur 200 transporte chaque portoir d'échantillons entre l'unité de chargement/ déchargement 100 et chacun des modules d'analyse 400a, 400b. Des zones tampons 300a, 300b sont respectivement associées aux modules d'analyse 400a, 400b. Chaque zone tampon permet de stocker temporairement des portoirs reçus en provenance de l'unité de chargement/déchargement 100 dans l'attente d'être analysés par le module d'analyse 400a, 400b correspondant. JPH10282111 A1 décrit un système d'analyse comprenant une unité de chargement 1 de portoirs d'échantillons, des modules d'analyse 6, 14 et une unité de contrôle 50,un portoir d'échantillons est introduit dans le système d'analyse par une entrée 35 puis transféré au premier module d'analyse 6 ou au deuxième module d'analyse 14 par un convoyeur 3. Après analyse d'un échantillon, chaque module d'analyse 6, 14 envoie les résultats à l'unité de contrôle 50, l'unité de contrôle 50 détermine, à partir des résultats reçus, si l'échantillon doit être testé ou examiné à nouveau, les portoirs sont stockés après analyse dans une unité de stockage dans l'attente d'être examiné ou testé à nouveau si nécessaire.

JP 5 049769 B2 décrit un système de traitement d'échantillons ayant une unité de chargement/ déchargement 100 de portoirs d'échantillons, plusieurs modules d'analyse 400a, 400b et un convoyeur 200. Des zones tampons 300a, 300b sont respectivement associées aux modules d'analyse 400a, 400b pour stocker temporairement des portoirs reçus en provenance de l'unité de chargement/déchargement 100.

Cependant, ces systèmes peuvent être améliorés tant dans leur gestion du flux que dans l'encombrement qui les caractérise.

L'invention vient améliorer la situation. À cet effet, elle propose un système d'analyses biologiques présentant les caractéristiques de la revendication 1.

Ce système d'analyses biologiques est particulièrement avantageux car il permet de gagner en compacité, les entrées et sorties du système étant réalisées par les entrées et sorties des dispositifs qui le composent. De plus, le fait d'avoir plusieurs entrées et plusieurs sorties pour le système permet de mettre en œuvre des stratégies de gestion du flux qui permettent d'optimiser la charge de travail du personnel de laboratoire et d'obtenir une distribution intelligente des portoirs. Ensuite, les multiples entrées et/ou sorties permettent d'obtenir un dispositif modulable et personnalisable. En effet, l'utilisateur peut faire le choix de charger une ou plusieurs entrées avec des portoirs contenant des tubes.

Selon diverses variantes, l'accessoire selon l'invention peut présenter une ou plusieurs des caractéristiques suivantes :
- le contrôleur est agencé pour commander la sortie du système d'analyses biologiques d'un portoir de tubes donné par une sortie du dispositif d'analyses biologiques choisie en fonction d'un état de charge des sorties du dispositif d'analyses biologiques,
- le contrôleur est agencé pour commander la sortie du système d'analyses biologiques d'un portoir de tubes donné par une sortie du système d'analyses biologiques choisie en fonction d'un évènement lié à l'analyse des tubes du portoir de tubes donné et/ou d'analyses ultérieures prévues pour un ou plusieurs des tubes du portoir de tubes,
- le contrôleur est agencé pour commander la sortie du système d'analyses biologiques d'un portoir de tubes donné par une sortie telle qu'une sortie donnée est de manière exclusive choisie en fonction des résultats des analyses des tubes du portoir de tubes donné, ou en fonction d'un état de charge des sorties du dispositif d'analyses biologiques,

- le contrôleur est agencé pour transférer un portoir de tubes donné d'un premier dispositif d'analyses biologiques vers un deuxième dispositif d'analyses biologiques lorsque les conditions suivantes sont remplies :
   - l'état de charge du premier dispositif d'analyses biologiques indique une surcharge,
   - l'état de charge du deuxième dispositif d'analyses biologiques n'indique pas une surcharge,
   - le deuxième dispositif d'analyses biologiques est apte réaliser certaines au moins des analyses prévues pour les tubes reçus sur le portoir de tubes donné,
- le contrôleur est agencé pour commander le traitement d'un ou plusieurs tubes d'un portoir de tubes donné par un dispositif d'analyses biologiques comprenant l'entrée par laquelle le portoir de tubes donné a été introduit dans le système d'analyses biologiques lorsque les conditions suivantes sont remplies :
   - l'état de charge du dispositif d'analyses biologiques n'indique pas une surcharge,
   - le dispositif d'analyses biologiques est apte à réaliser certaines au moins des analyses prévues pour les tubes reçus sur le portoir de tubes donné, et
- le contrôleur est agencé pour commander la sortie du système d'analyses biologiques d'un portoir de tubes donné par la sortie du dispositif d'analyses biologiques qui comprend l'entrée par laquelle le portoir de tubes donné a été introduit dans le système d'analyses biologiques.

L'invention concerne également un système d'analyses biologiques, présentant les caractéristiques de la revendication 8.

L'invention concerne également un procédé d'analyses biologiques comprenant l'introduction d'une pluralité de portoirs de tubes dans un système d'analyses biologiques selon l'invention, et le transfert d'un portoir de tubes reçu dans le système d'analyses biologiques via le convoyeur vers un autre dispositif d'analyses biologiques en fonction d'un évènement lié à l'analyse des tubes du portoir de tubes donné et/ou d'opérations ultérieures prévues pour un ou plusieurs des tubes du portoir de tubes et/ou d'un état de charge respectif des dispositifs d'analyses biologiques.

D'autres caractéristiques et avantages de l'invention apparaîtront mieux à la lecture de la description qui suit, tirée d'exemples donnés à titre illustratif et non limitatif, tirés des dessins sur lesquels :
- la Figure 1 représente une vue en perspective d'un système d'analyses biologiques selon l'invention, et
- la Figure 2 représente une vue de dessus de la Figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

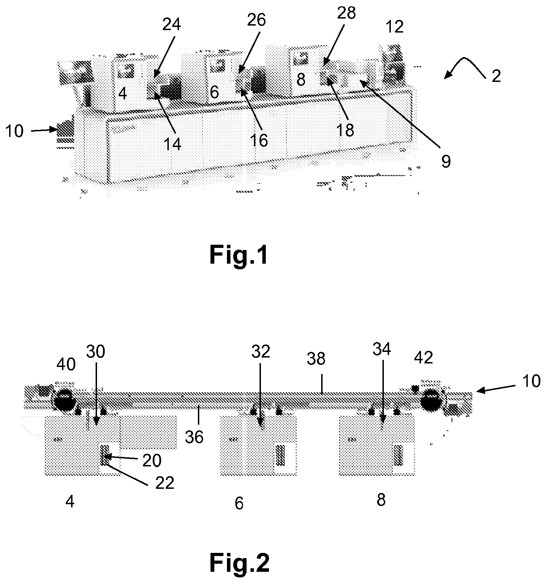

La Figure 1 représente une vue en perspective d'un système d'analyses biologiques 2 selon l'invention, et la Figure 2 est une vue de dessus de la Figure 1. Comme on peut le voir sur cette figure, le système d'analyses biologiques 2 comprend trois dispositifs d'analyses biologiques 4, 6 et 8, un étaleur/colorateur de lames 9, un convoyeur 10 et un contrôleur 12.

Dans l'exemple décrit ici, les dispositifs d'analyses biologiques 4, 6 et 8 sont du type analyseur hématologique. Le dispositif d'analyses biologiques 4 (respectivement 6, 8) comporte une tablette 14 (respectivement 16, 18) qui reçoit des portoirs 20 de tubes 22 à analyser. Le dispositif d'analyses biologiques 4 (respectivement 6, 8) comporte également une tablette 24 (respectivement 26, 28) qui reçoit les portoirs 20 de tubes 22 qui ont fait l'objet d'une analyse. Le dispositif d'analyses biologiques 4 (respectivement 6, 8) comporte également une région d'échange 30 (respectivement 32, 34) qui permet de transférer un portoir 20 sur le convoyeur 10 ou de recevoir un portoir 20 de ce dernier.

Les trois analyseurs hématologiques 4, 6, 8 peuvent mesurer un échantillon de sang contenu dans un tube 22. Chaque appareil prend le tube 22 contenu dans un portoir 20 qui se trouve soit sur une tablette de chargement, soit sur le convoyeur, derrière l'appareil de mesure. Quand la mesure de l'échantillon de sang est complète, l'appareil remet le tube dans un portoir.

L'étaleur/colorateur de lame 9 prépare des lames de sang qui sont destinées à être analysées. Dans un premier temps, un volume de sang est prélevé dans un tube 22 qui se trouve dans un portoir 20. Ensuite, le sang prélevé est déposé sur une lame, étiré sur la lame de façon à obtenir une couche fine, puis séché. L'échantillon est par la suite coloré.

Le convoyeur 10 définit un circuit fermé et comprend dans l'exemple décrit ici une chaîne en forme de boucle comprenant deux chemins 36 et 38. La chaîne 36 est reliée à chacune des régions d'échange 30, 32 et 34, de sorte qu'un portoir 20 est introduit sur le convoyeur 10 ou récupéré depuis celui-ci à partir du chemin 36. Le convoyeur 10 entraîne le chemin 36 dans une direction, et la chaîne 38 dans une direction opposée à la direction d'entraînement du chemin chaîne 36.

Le convoyeur 10 comporte également deux dispositifs de retour 40 et 42 qui sont respectivement disposés en aval du dispositif 4 et en amont du dispositif 8 par rapport au sens d'entraînement du chemin 36.

Le dispositif de retour 40 a pour fonction de transférer un portoir 20 depuis le chemin 36 vers le chemin 38, et le dispositif de retour 42 a pour fonction de transférer un portoir 20 depuis le chemin 36 vers le chemin 38 par rotation à 180°. Ainsi, quelle que soit la région d'échange 30, 32 ou 34 à partir de laquelle un portoir 20 a été introduit sur le convoyeur 10, ce portoir 20 peut être envoyé vers l'un quelconque des dispositifs 4, 6 ou 8 selon des règles de transport. Cette capacité, quels que soient les moyens mis en œuvre pour la réaliser, caractérise le fait que le convoyeur 10 définit un circuit fermé.

En variante, le convoyeur 10 peut être réalisé sous la forme de deux chaînes 36 et 38 entraînées indépendamment et reliées par les dispositifs de retour 40 et 42.

Ainsi, les tablettes 14, 16 et 18 forment des entrées pour le système 2, les tablettes 24, 26 et 28 forment des sorties pour le système 2, et les régions d'échange 30, 32 et 34 entre les dispositifs 4, 6 et 8 et le convoyeur 10 sont distinctes des entrées et sorties du système 2.

Dans diverses variantes, l'entrée et la sortie d'un ou plusieurs dispositifs peuvent être inversées, ou être réalisées sur une même tablette en étant séparées de manière appropriée. De manière similaire, selon les configurations, la région d'échange pourra être rapprochée de l'entrée et de la sortie d'un ou plusieurs dispositifs, dès lors qu'elles restent bien distinctes les unes des autres.

Dans l'exemple décrit ici, les échantillons contenus dans les tubes 22 d'un portoir 20 pourront faire l'objet d'analyses dans le dispositif d'analyses biologiques dans lequel il a été introduit dans le système 2 avant d'être transmis au convoyeur 10 ou sortir directement par l'une des tablettes 24, 26 ou 28 sans passer par le convoyeur 10, ou être transmis directement depuis l'entrée par laquelle il a été introduit vers la région d'échange du dispositif concerné.

Le contrôleur 12 est dans l'exemple décrit ici un ordinateur qui comprend de manière classique un affichage, un répartiteur, une mémoire et une interface réseau lui permettant de communiquer avec les dispositifs d'analyses biologiques.

La mémoire peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 2, ou sur celle-ci. Ces données peuvent être effacées après que le dispositif ait effectué ses tâches ou conservées.

Le répartiteur accède directement ou indirectement à la mémoire pour mettre en œuvre les fonctions du contrôleur 12. Il peut être réalisé sous la forme d'un code informatique approprié exécuté sur un ou plusieurs processeurs. Par processeurs, il doit être compris tout processeur adapté au traitement de données informatiques. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison d'un ou plusieurs processeurs et d'un ou plusieurs circuits électroniques peut également être envisagée.

Le contrôleur 12 est relié aux dispositifs d'analyses biologiques 4, 6 et 8 pour connaître toutes les données concernant les analyses réalisées et en cours ainsi que l'état des portoirs 20 reçus dans ces dispositifs, ainsi qu'au convoyeur 10 notamment pour connaître les portoirs 20 reçus sur celui-ci.

Ainsi, le contrôleur 12 peut organiser le flux de portoirs 20 sur l'ensemble du système d'analyses biologiques 2, en ayant accès à toutes les données caractérisant l'état des portoirs 20 en cours de traitement, l'état des analyses en cours et les analyses déjà réalisées, ainsi que les analyses qui sont prévues pour les portoirs 20 reçus aux entrées du système 2.

Le contrôleur 12 est donc en mesure de déterminer un état de charge pour chacun des dispositif d'analyses biologiques 4, 6 et 8, et de commander le transfert de portoirs 20 sur le convoyeur 10 d'un dispositif vers un autre en fonction d'un état de charge des dispositifs, de stratégies de gestion de la charge au niveau du système d'analyses biologiques 2, de la répartition de la charge de travail du personnel interagissant avec le système d'analyses biologiques 2, d'analyses complémentaires nécessaires, de pannes, nombre de dispositifs d'analyse sur la chaine, etc.

Par état de charge, on entend le nombre total de portoirs que reçoit un dispositif d'analyses biologiques ajouté au nombre de portoirs sur le convoyeur qui lui sont destinés. L'état de charge d'un dispositif d'analyses biologiques donné est considéré comme « en surcharge » lorsque ce nombre excède une quantité prédéterminée. Dans l'exemple décrit ici, cette quantité est fixée à 2/3 du nombre de portoirs que peut recevoir le dispositif d'analyses biologiques. En variante, cette valeur peut être déterminée dynamiquement par le contrôleur 12 en fonction des conditions d'exploitation et/ou en fonction de plusieurs paramètres : cadence visée pour le système, nombre d'emplacements libres sur le ou les agitateurs du dispositif concerné, temps moyen pour déplacer un portoir d'un dispositif à un autre, etc.

Par exemple, dans un système comprenant trois dispositifs d'analyse, d'un convoyeur comportant deux chemins et deux mécanismes de retour reliant les deux chemins, la quantité prédéterminée au-delà de laquelle un dispositif d'analyse sera considéré en surcharge pourra être un nombre choisi de portoirs reçus ou destinés à ce dispositif d'analyse. Ainsi, quand le nombre de portoirs reçus ou à destination du dispositif d'analyse sera égal au nombre choisi, celui-ci sera dans l'incapacité de recevoir des portoirs supplémentaires. Les portoirs seront répartis à d'autres appareils d'analyse dont la quantité de portoirs reçus ou à destination de ceux-ci sera inférieure au nombre choisi. Ce nombre choisi est déterminé via plusieurs critères dont notamment : le nombre de dispositifs reliés, la longueur du convoyeur, la rapidité des zones d'échange ou encore la vitesse du portoir sur le convoyeur.

Le contrôleur 12 a pour fonction de déterminer quels sont les portoirs devant être pris en charge par un autre dispositif d'analyses biologiques que celui sur lequel ils ont été introduits dans le système 2 pour améliorer la cadence et/ou tenir compte des impondérables, ainsi que de déterminer les sorties pour les portoirs qui ont été analysés. Le contrôleur 12 peut donc mettre en œuvre une ou plusieurs stratégies de gestion de charge courante et une ou plusieurs stratégies de gestion de sortie.

En référence aux stratégies de gestion de charge courante, selon un mode de réalisation préféré de l'invention, si un dispositif d' analyses biologiques reçoit à son entrée un portoir de tubes pour lequel il peut réaliser toutes les analyses demandées, ou si le nombre d'analyses demandées qu'il sait réaliser excède une quantité choisie (par exemple 75% des analyses demandées), alors le portoir est pris en charge par l'instrument. La connaissance des analyses à réaliser peut être obtenue par lecture d'informations depuis le portoir et/ou les tubes reçus sur celui-ci et/ou par accès à une base de données

L'envoi sur le convoyeur est notamment prévu dans les cas suivants :
- lorsqu'un dispositif d'analyses biologiques est en surcharge, et qu'il existe un autre dispositif d'analyses biologiques qui peut réaliser toutes les analyses demandées (ou si le nombre d'analyses demandées qu'il peut réaliser excède une quantité choisie, par exemple 75% des analyses demandées),
- lorsqu'un dispositif d'analyses biologiques ne peut pas réaliser toutes les analyses à effectuer sur les tubes compris dans le portoir,
- lorsque tous les dispositifs d'analyse biologiques sont en surcharge, le convoyeur sert de zone de tampon, ce qui permet un gain de place et une plus grande souplesse sans frais supplémentaire ni unité supplémentaire.

Il est important de noter que le transfert par le convoyeur n'est réalisé que si l'une de ces conditions est remplie. Cela est très différent des systèmes existants, qui comprennent en général une zone tampon d'entrée, une zone tampon de sortie, et un algorithme de répartition sur les instruments pour lisser la charge.

En effet, cet algorithme est appliqué systématiquement aux systèmes existants en vue d'atteindre une cadence cible, mais il ne permet pas de s'adapter aux besoins temps réels permettant de maintenir la cadence. De plus, les entrées, sorties des dispositifs forment la région d'échange avec le convoyeur, ce qui fait de la zone tampon d'entrée et de la zone de tampon de sortie de ces systèmes la seule entrée et la seule sortie, ainsi que des goulots d'étranglement potentiels.

Selon l'invention, comme le système comprend plusieurs entrées, le lissage peut être réalisé en partie par le personnel qui charge les portoirs sur les tablettes d'entrée, ce qui répartit naturellement la charge dès l'entrée dans le système 2. Le convoyeur n'est utilisé que pour permettre de maintenir la cadence du système 2, et lorsque cela est nécessaire. La cadence est donc maintenue par une gestion de la répartition au niveau des dispositifs d'analyses, et non pas au niveau de l'entrée ou de la sortie du système, grâce à la séparation entre l'entrée, la sortie et la région d'échange avec le convoyeur des dispositifs. De plus, si le personnel ne charge pas uniformément les dispositifs d'analyses biologiques, la cadence du système peut néanmoins être maintenue en redirigeant des portoirs vers les dispositifs moins chargés dans la limite de la quantité prédéterminée afin d'éviter la surcharge d'appareil.

En référence aux stratégies de gestion de sortie, selon un mode de réalisation préféré de l'invention, le contrôleur 12 commande la sortie des portoirs de sorte qu'un portoir donné sorte par la sortie du dispositif sur lequel il a été introduit, quel que soit le dispositif qui a réellement réalisé les analyses des tubes qu'il reçoit. Cela permet de lisser la charge de sortie dans le sens où elle sera répartie de manière identique à la charge d'entrée. Cela permet également d'éviter une accumulation de portoirs 20 au niveau des dispositifs d'analyses biologiques pouvant réaliser un nombre de tests plus important que les autres.

De manière complémentaire ou en variante, les multiples sorties du système peuvent être utilisées pour réaliser un tri en sortie du système 2. Ainsi, certaines sorties pourront être notamment dédiées en fonction du type de tests effectués ou à effectuer par la suite, des problèmes survenus durant l'analyse, du service d'un ou des échantillons des portoirs, de la priorité affectée etc...

Si le lissage de charge de sortie décrit au paragraphe précédent est appliqué, alors les sorties devront être séparées en fonction du lissage auquel elles sont affectées :
- une même sortie ne pourra servir qu'au lissage de charge de sortie, ou qu'au tri,
- le lissage de charge de sortie devra être réalisé légèrement différemment, les portoirs ayant été introduits sur un dispositif dont la sortie est affectée au tri, mais qui ne sont pas prévus pour sortir par cette sortie, devant être répartis sur les sorties affectées au lissage de charge de sortie.

Dans les exemples décrits plus haut, les entrées et sorties de tous les dispositifs d'analyse biologiques sont utilisées comme entrée ou sortie pour le système. En variante, certaines entrées et/ou sorties pourraient ne pas être utilisées de cette manière.

Le tri de sortie est complémentaire du tri de tubes 22 sur un portoir 20 permis grâce à un passeur pouvant contenir plusieurs portoirs, comme cela est décrit dans les demandes de brevet français FR 1560889, FR1560890, et FR 1560893. En effet, il est possible de trier les tubes par catégories et de mettre les tubes d'une même catégorie sur un même portoir. Le tri des portoirs en sortie permet ainsi de compléter la solution de tri de tube afin d'offrir un tri pertinent.

Le tri de sortie des portoirs permet d'affecter un type de portoir à un dispositif particulier. Ce tri peut s'effectuer en fonction de différents paramètres dont notamment : en cas d'alarme sur un tube dans un portoir ; en fonction des opérations faites et/ou restant à faire sur un ou des tubes d'un portoir ; en fonction de la démographie du patient ; en fonction de la valeur des paramètres étudiés ou encore en fonction des informations du tube.

Il est également possible de décrire, en variante, un système dont la zone de chargement des portoirs se ferait en un point unique mais dont les zones de sortie pourraient être multiples. Ce système pourrait implémenter les mêmes règles de lissage ainsi que de tri de sortie.

## Revendications

1. Système d'analyses biologiques, comprenant au moins deux dispositifs d'analyses biologiques (4, 6, 8) reliés entre eux par un convoyeur (10) définissant un circuit fermé, chaque dispositif d'analyses biologiques (4, 6, 8) comprenant au moins une entrée (14, 16, 18) et une sortie (24, 26, 28) pour des portoirs (20) de tubes (22), et au moins une région d'échange (30, 32, 34) de portoirs (20) de tubes (22) avec le convoyeur (10), laquelle région d'échange (30, 32, 34) est distincte de l'entrée (14, 16, 18) et de la sortie (24, 26, 28), l'entrée (14, 16, 18) d'au moins deux dispositifs d'analyses biologiques (4, 6, 8) formant chacune une entrée du système d'analyses biologiques pour des portoirs (20) de tubes (22), et la sortie (24, 26, 28) d'au moins deux dispositifs d'analyses biologiques (4, 6, 8) formant chacune une sortie du système d'analyses biologiques pour des portoirs (20) de tubes (22), le système d'analyses biologiques (2) comprenant en outre un contrôleur (12) relié à chaque dispositif d'analyses biologiques (4, 6, 8) et au convoyeur (10) et en mesure de déterminer un état de charge pour chaque dispositif d'analyses biologiques (4, 6, 8), lequel contrôleur (12) est agencé pour commander le transfert d'un portoir (20) de tubes (22) reçu dans le système d'analyses biologiques (2) via le convoyeur (10) vers un autre dispositif d'analyses biologiques (4, 6, 8) en fonction des opérations à effectuer sur les tubes (22) de ce portoir (20), et/ou de l'état de charge respectif des dispositifs d'analyses biologiques (4, 6, 8), **caractérisé en ce que** le contrôleur est agencé en outre, lorsque tous les dispositifs d'analyses biologiques (4, 6, 8) sont en surcharge, pour commander le transfert d'un portoir (20) de tubes (22) reçu dans le système d'analyses biologiques (2) sur le convoyeur (10) utilisé alors comme zone tampon.

2. Système d'analyses biologiques selon la revendication 1, dans lequel le contrôleur (12) est agencé pour commander la sortie du système d'analyses biologiques d'un portoir (20) de tubes (22) donné par une sortie (24, 26, 28) du dispositif d'analyses biologiques (4, 6, 8) choisie en fonction d'un état de charge des sorties du dispositif d'analyses biologiques (4, 6, 8).

3. Système d'analyses biologiques selon la revendication 2, dans lequel le contrôleur (12) est agencé pour commander la sortie du système d'analyses biologiques d'un portoir (20) de tubes (22) donné par une sortie du système d'analyses biologiques (2) choisie en fonction d'un évènement lié à l'analyse des tubes (22) du portoir (20) de tubes (22) donné et/ou d'analyses ultérieures prévues pour un ou plusieurs des tubes (22) du portoir (20) de tubes (22).

4. Système d'analyses biologiques selon la revendication 3, dans lequel le contrôleur (12) est agencé pour commander la sortie du système d'analyses biologiques d'un portoir (20) de tubes (12) donné par une sortie telle qu'une sortie donnée est de manière exclusive choisie en fonction des résultats des analyses des tubes (22) du portoir (20) de tubes (22) donné, ou en fonction d'un état de charge des sorties du dispositif d'analyses biologiques (4, 6, 8).

5. Système selon l'une quelconque des revendications précédentes, dans lequel le contrôleur (12) est agencé pour transférer un portoir (20) de tubes (22) donné d'un premier dispositif d'analyses biologiques (4, 6, 8) vers un deuxième dispositif d'analyses biologiques (4, 6, 8) lorsque les conditions suivantes sont remplies :
- l'état de charge du premier dispositif d'analyses biologiques (4, 6, 8) indique une surcharge,
- l'état de charge du deuxième dispositif d'analyses biologiques (4, 6, 8) n'indique pas une surcharge,
- le deuxième dispositif d'analyses biologiques (4, 6, 8) est apte à réaliser certaines au moins des analyses prévues pour les tubes (22) reçus sur le portoir (20) de tubes (22) donné.

6. Système selon l'une quelconque des revendications précédentes, dans lequel le contrôleur (12) est agencé pour commander le traitement d'un ou plusieurs tubes (22) d'un portoir (20) de tubes (22) donné par un dispositif d'analyses biologiques (4, 6, 8) comprenant l'entrée (14, 16, 18) par laquelle le portoir (20) de tubes (22) donné a été introduit dans le système d'analyses biologiques lorsque les conditions suivantes sont remplies :
- l'état de charge du dispositif d'analyses biologiques (4, 6, 8) n'indique pas une surcharge,
- le dispositif d'analyses biologiques (4, 6, 8) est apte réaliser certaines au moins des analyses prévues pour les tubes (22) reçus sur le portoir (20) de tubes (22) donné.

7. Système d'analyses biologiques selon l'une quelconque des revendications précédentes, dans lequel le contrôleur (12) est agencé pour commander la sortie du système d'analyses biologiques d'un portoir (20) de tubes (22) donné par la sortie (24, 26, 28) du dispositif d'analyses biologiques (4, 6, 8) qui comprend l'entrée (14, 16, 18) par laquelle le portoir (20) de tubes (22) donné a été introduit dans le système d'analyses biologiques (2).

8. Système d'analyses biologiques, comprenant au moins une entrée et au moins deux sorties reliées à au moins deux dispositifs d'analyses biologiques (4, 6, 8) reliés entre eux par un convoyeur (10) définissant un circuit fermé, chaque dispositif d'analyses biologiques (4, 6, 8) comprenant au moins une région d'échange de portoirs (30, 32, 34) de tubes (22) avec le convoyeur (10), laquelle région d'échange (30, 32, 34) est distincte desdites au moins une entrée et deux sorties, le système d'analyses biologiques (2) comprenant en outre un contrôleur (12) relié à chaque dispositif d'analyses biologiques (4, 6, 8) et au convoyeur (10) et en mesure de déterminer un état de charge pour chaque dispositif d'analyses biologiques (4, 6, 8), lequel contrôleur (12) est agencé pour commander le transfert d'un portoir (20) de tubes (22) reçu dans le système d'analyses biologiques (2) via le convoyeur (10) vers un autre dispositif d'analyses biologiques (4, 6, 8) en fonction d'un évènement lié à l'analyse des tubes du portoir de tubes donné et/ou d'opérations ultérieures prévues pour un ou plusieurs des tubes (22) du portoir (20) de tubes (22), et/ou de l'état de charge respectif des dispositifs d'analyses biologiques (4, 6, 8), **caractérisé en ce que** le contrôleur est agencé en outre, lorsque tous les dispositifs d'analyses biologiques (4, 6, 8) sont en surcharge, pour commander le transfert d'un portoir (20) de tubes (22) reçu dans le système d'analyses biologiques (2) sur le convoyeur (10) utilisé alors comme zone tampon.

9. Procédé d'analyse biologiques, comprenant l'introduction d'une pluralité de portoirs (20) de tubes (22) dans un système d'analyses biologiques selon l'une des revendications précédentes, et le transfert d'un portoir (20) de tubes (22) reçu dans le système d'analyses biologiques (2) via le convoyeur (10) vers un autre dispositif d'analyses biologiques (4, 6, 8) en fonction des opérations à effectuer sur les tubes (22) de ce portoir (20), et/ou d'un état de charge respectif des dispositifs d'analyses biologiques (4, 6, 8).

## Patentansprüche

1. Biologisches Analysesystem, umfassend mindestens zwei biologische Analysevorrichtungen (4, 6, 8), die durch ein Förderband (10) miteinander verbunden sind, das einen geschlossenen Kreislauf definiert, wobei jede biologische Analysevorrichtung (4, 6, 8) mindestens einen Eingang (14, 16, 18) und einen Ausgang (24, 26, 28) für Gestelle (20) mit Röhrchen (22) und mindestens einen Austauschbereich (30, 32, 34) von Gestellen (20) mit Röhrchen (22) mit dem Förderband (10) umfasst, wobei der Austauschbereich (30, 32, 34) von dem Eingang (14, 16, 18) und Ausgang (24, 26, 28) getrennt ist, wobei der Eingang (14, 16, 18) von mindestens zwei biologischen Analysevorrichtungen (4, 6, 8) jeweils einen Eingang des biologischen Analysesystems für Gestelle (20) mit Röhrchen (22) bilden und der Ausgang (24, 26, 28) von mindestens zwei biologischen Analysevorrichtungen (4, 6, 8) jeweils einen Ausgang des biologischen Analysesystems für Gestelle (20) mit Röhrchen (22) bilden, wobei das biologische Analysesystem (2) ferner eine Steuerung (12) umfasst, die mit jeder biologischen Analysevorrichtung (4, 6, 8) und dem Förderband (10) verbunden ist und in der Lage ist, einen Beladungszustand für jede biologische Analysevorrichtung (4, 6, 8) zu bestimmen, wobei die Steuerung (12) so angeordnet ist, dass sie die Übertragung eines in dem biologischen Analysesystem (2) aufgenommenen Gestells (20) mit Röhrchen (22) über das Förderband (10) zu einer anderen biologischen Analysevorrichtung (4, 6, 8) in Abhängigkeit von den an den Röhrchen (22) dieses Gestells (20) durchzuführenden Vorgängen und/oder dem jeweiligen Beladungszustand der biologischen Analysevorrichtungen (4, 6, 8) steuert, **dadurch gekennzeichnet, dass** die Steuerung ferner so angeordnet ist, dass sie, wenn alle biologischen Analysevorrichtungen (4, 6, 8) überlastet sind, die Übertragung eines in dem biologischen Analysesystem (2) aufgenommenen Gestells (20) mit Röhrchen (22) über das Förderband (10) steuert, das dann als Pufferbereich verwendet wird.

2. Biologisches Analysesystem nach Anspruch 1, wobei die Steuerung (12) so angeordnet ist, dass sie den Ausgang des biologischen Analysesystems eines bestimmten Gestells (20) mit Röhrchen (22) durch einen Ausgang (24, 26, 28) der biologischen Analysevorrichtung (4, 6, 8), der in Abhängigkeit von einem Beladungszustand der Ausgänge der biologischen Analysevorrichtung (4, 6, 8) ausgewählt wird.

3. Biologisches Analysesystem nach Anspruch 2, wobei die Steuerung (12) so angeordnet ist, dass sie den Ausgang des biologischen Analysesystems eines bestimmten Gestells (20) mit Röhrchen (22) durch einen Ausgang des biologischen Analysesystems (2) steuert, der in Abhängigkeit von einem Ereignis im Zusammenhang mit der Analyse der Röhrchen (22) des bestimmten Gestells (20) mit Röhrchen (22) und/oder von späteren Analysen, die für eines oder mehrere der Röhrchen (22) des Gestells (20) mit Röhrchen (22) vorgesehen sind, ausgewählt wird.

4. Biologisches Analysesystem nach Anspruch 3, wobei die Steuerung (12) so angeordnet ist, dass sie den Ausgang des biologischen Analysesystems eines bestimmten Gestells (20) mit Röhrchen (12) durch einen solchen Ausgang steuert, dass ein bestimmter Ausgang ausschließlich in Abhängigkeit von den Ergebnissen der Analysen der Röhrchen (22) des bestimmten Gestells (20) mit Röhrchen (22) oder in Abhängigkeit von einem Beladungszustand der Ausgänge der biologischen Analysevorrichtung (4, 6, 8) ausgewählt wird.

5. System nach einem der vorhergehenden Ansprüche, wobei die Steuerung (12) so angeordnet ist, dass sie ein bestimmtes Gestell (20) mit Röhrchen (22) von einer ersten biologischen Analysevorrichtung (4, 6, 8) zu einer zweiten biologischen Analysevorrichtung (4, 6, 8) dann überträgt, wenn die folgenden Bedingungen erfüllt sind:
- der Beladungszustand der ersten biologischen Analysevorrichtung (4, 6, 8) zeigt eine Überlastung an,
- der Beladungszustand der zweiten biologischen Analysevorrichtung (4, 6, 8) zeigt keine Überlastung an,
- die zweite biologische Analysevorrichtung (4, 6, 8) ist geeignet, mindestens einige der für die auf dem bestimmten Gestell (20) mit Röhrchen (22) aufgenommenen Röhrchen (22) vorgesehenen Analysen durchzuführen.

6. System nach einem der vorhergehenden Ansprüche, wobei die Steuerung (12) so angeordnet ist, dass sie die Verarbeitung eines oder mehrerer Röhrchen (22) eines bestimmten Gestells (20) mit Röhrchen (22) durch eine biologische Analysevorrichtung (4, 6, 8), die den Eingang (14, 16, 18) umfasst, durch den das bestimmte Gestell (20) mit Röhrchen (22) in das biologische Analysesystem eingeführt wurde, dann steuert, wenn die folgenden Bedingungen erfüllt sind:
- der Beladungszustand der biologischen Analysevorrichtung (4, 6, 8) zeigt keine Überlastung an,
- die biologische Analysevorrichtung (4, 6, 8) ist geeignet, mindestens einige der für die auf dem bestimmten Gestell (20) mit Röhrchen (22) aufgenommenen Röhrchen (22) vorgesehenen Analysen durchzuführen.

7. Biologisches Analysesystem nach einem der vorhergehenden Ansprüche, wobei die Steuerung (12) so angeordnet ist, dass sie den Ausgang des biologischen Analysesystems eines bestimmten Gestells (20) mit Röhrchen (22) durch den Ausgang (24, 26, 28) derjenigen biologischen Analysevorrichtung (4, 6, 8), die den Eingang (14, 16, 18) umfasst, durch den das bestimmte Gestell (20) mit Röhrchen (22) in das biologische Analysesystem (2) eingeführt wurde, steuert.

8. Biologisches Analysesystem, umfassend mindestens einen Eingang und mindestens zwei Ausgänge, die mit mindestens zwei biologischen Analysevorrichtungen (4, 6, 8) verbunden sind, die durch ein Förderband (10) miteinander verbunden sind, das einen geschlossenen Kreislauf definiert, wobei jede biologische Analysevorrichtung (4, 6, 8) mindestens einen Austauschbereich (30, 32, 34) für Gestelle mit Röhrchen (22) mit dem Förderband (10) umfasst, wobei der Austauschbereich (30, 32, 34) von dem mindestens einen Eingang und zwei Ausgängen getrennt ist, wobei das biologische Analysesystem (2) ferner eine Steuerung (12) umfasst, die mit jeder biologischen Analysevorrichtung (4, 6, 8) und dem Förderband (10) verbunden und in der Lage ist, einen Beladungszustand für jede biologische Analysevorrichtung (4, 6, 8) zu bestimmen, wobei die Steuerung (12) so angeordnet ist, dass sie die Übertragung eines in dem biologischen Analysesystem (2) aufgenommenen Gestells (20) mit Röhrchen (22) über das Förderband (10) zu einer anderen biologischen Analysevorrichtung (4, 6, 8) in Abhängigkeit von einem Ereignis im Zusammenhang mit der Analyse der Röhrchen des bestimmten Gestells mit Röhrchen und/oder von späteren Vorgängen, die für ein oder mehrere der Röhrchen (22) des Gestells (20) mit Röhrchen (22) vorgesehen sind, und/oder von dem jeweiligen Beladungszustand der biologischen Analysevorrichtungen (4, 6, 8) steuert, **dadurch gekennzeichnet, dass** die Steuerung ferner so angeordnet ist, dass sie, wenn alle biologischen Analysevorrichtungen (4, 6, 8) überlastet sind, die Übertragung eines in dem biologischen Analysesystem (2) aufgenommenen Gestells (20) mit Röhrchen (22) über das Förderband (10) steuert, das dann als Pufferbereich verwendet wird.

9. Verfahren zur biologischen Analyse, umfassend das Einführen einer Vielzahl von Gestellen (20) mit Röhrchen (22) in ein biologisches Analysesystem nach einem der vorhergehenden Ansprüche und die Übertragung eines in dem biologischen Analysesystem (2) aufgenommenen Gestells (20) mit Röhrchen (22) über das Förderband (10) zu einer anderen biologischen Analysevorrichtung (4, 6, 8) in Abhängigkeit von den an den Röhrchen (22) dieses Gestells (20) durchzuführenden Vorgängen und/oder von einem jeweiligen Beladungszustand der biologischen Analysevorrichtungen (4, 6, 8).

## Claims

1. A biological analysis system, comprising at least two biological analysis devices (4, 6, 8) connected to each other by a conveyor (10) defining a closed circuit, each biological analysis device (4, 6, 8) comprising at least one inlet (14, 16, 18) and one outlet (24, 26, 28) for racks (20) of tubes (22), and at least one exchange area (30, 32, 34) of racks (20) of tubes (22) with the conveyor (10), which exchange area (30, 32, 34) is separate from the inlet (14, 16, 18) and the outlet (24, 26, 28), the inlet (14, 16, 18) of at least two biological analysis devices (4, 6, 8) each forming an inlet of the biological analysis system for racks (20) of tubes (22), and the outlet (24, 26, 28) of at least two biological analysis devices (4, 6, 8) each forming an outlet of the biological analysis system for racks (20) of tubes (22), the biological analysis system (2) further comprising a controller (12) connected to each biological analysis device (4, 6, 8) and to the conveyor (10) and capable of determining a load state for each biological analysis device (4, 6, 8), which controller (12) is arranged for controlling the transfer of a rack (20) of tubes (22) received in the biological analysis system (2) via the conveyor (10) to another biological analysis device (4, 6, 8) according to the operations to be performed on the tubes (22) of this rack (20), and/or the respective load state of the biological analysis devices (4, 6, 8), **characterised in that** the controller is furthermore arranged, when all biological analysis devices (4, 6, 8) are overloaded, for controlling the transfer of a rack (20) of tubes (22) received in the biological analysis system (2) onto the conveyor (10) then used as a buffer zone.

2. The biological analysis system according to claim 1, wherein the controller (12) is arranged for controlling the outlet of the biological analysis system of a given rack (20) of tubes (22) via an outlet (24, 26, 28) of the biological analysis device (4, 6, 8) chosen according to a load state of the outlets of the biological analysis device (4, 6, 8).

3. The biological analysis system according to claim 2, wherein the controller (12) is arranged for controlling the outlet of the biological analysis system of a given rack (20) of tubes (22) via an outlet of the biological analysis system (2) chosen according to an event related to the analysis of the tubes (22) of the given rack (20) of tubes (22) and/or subsequent analyses planned for one or more of the tubes (22) of the rack (20) of tubes (22).

4. The biological analysis system according to claim 3, wherein the controller (12) is arranged for controlling the outlet of the biological analysis system of a given rack (20) of tubes (12) via such an outlet that a given outlet is chosen exclusively according to the results of the analyses of the tubes (22) of the given rack (20) of tubes (22), or according to a load state of the outlets of the biological analysis device (4, 6, 8).

5. The system according to any one of the preceding claims, wherein the controller (12) is arranged for transferring a given rack (20) of tubes (22) from a first biological analysis device (4, 6, 8) to a second biological analysis device (4, 6, 8) when the following conditions are met:
- the load state of the first biological analysis device (4, 6, 8) indicates an overload,
- the load state of the second biological analysis device (4, 6, 8) does not indicate an overload,
- the second biological analysis device (4, 6, 8) is capable of carrying out at least some of the analyses planned for the tubes (22) received on the given rack (20) of tubes (22).

6. The system according to any one of the preceding claims, wherein the controller (12) is arranged for controlling the processing of one or more tubes (22) of a given rack (20) of tubes (22) by a biological analysis device (4, 6, 8) comprising the inlet (14, 16, 18) via which the given rack (20) of tubes (22) was introduced into the biological analysis system when the following conditions are met:
- the load state of the biological analysis device (4, 6, 8) does not indicate an overload,
- the biological analysis device (4, 6, 8) is capable of carrying out at least some of the analyses planned for the tubes (22) received on the given rack (20) of tubes (22).

7. The biological analysis system according to any one of the preceding claims, wherein the controller (12) is arranged for controlling the outlet of the biological analysis system of a given rack (20) of tubes (22) via the outlet (24, 26, 28) of the biological analysis device (4, 6, 8) which comprises the inlet (14, 16, 18) via which the given rack (20) of tubes (22) was introduced into the biological analysis system (2).

8. A biological analysis system, comprising at least one inlet and at least two outlets connected to at least two biological analysis devices (4, 6, 8) connected to each other by a conveyor (10) defining a closed circuit, each biological analysis device (4, 6, 8) comprising at least one exchange area of racks (30, 32, 34) of tubes (22) with the conveyor (10), which exchange area (30, 32, 34) is separate from said at least one inlet and two outlets, the biological analysis system (2) further comprising a controller (12) connected to each biological analysis device (4, 6, 8) and to the conveyor (10) and capable of determining a load state for each biological analysis device (4, 6, 8), which controller (12) is arranged for controlling the transfer of a rack (20) of tubes (22) received in the biological analysis system (2) via the conveyor (10) to another biological analysis device (4, 6, 8) according to an event related to the analysis of the tubes of the given rack of tubes and/or subsequent operations planned for one or more of the tubes (22) of the rack (20) of tubes (22), and/or the respective load state of the biological analysis devices (4, 6, 8), **characterised in that** the controller is furthermore arranged, when all biological analysis devices (4, 6, 8) are overloaded, for controlling the transfer of a rack (20) of tubes (22) received in the biological analysis system (2) onto the conveyor (10) then used as a buffer zone.

9. A biological analysis method, comprising the introduction of a plurality of racks (20) of tubes (22) into a biological analysis system according to any one of the preceding claims, and the transfer of a rack (20) of tubes (22) received in the biological analysis system (2) via the conveyor (10) to another biological analysis device (4, 6, 8) according to the operations to be performed on the tubes (22) of this rack (20), and/or a respective load state of the biological analysis devices (4, 6, 8).
